# EUROPEAN PATENT APPLICATION

(11) **EP 1 579 758 A1**
(43) Date of publication of application: **28.09.2005**
(21) Application number: 05075617.0
(22) Date of filing: 14.03.2005
(51) Int. Cl.: A01J 7/02, A01J 5/08

(54) **A device for and a method of milking a dairy animal**

(30) Priority: 26.03.2004 NL 1025818
(71) Applicant: Lely Enterprises AG, 6300 ZUG (CH)
(72) Inventor: Mostert, Gerard, 3181 WV Rozenburg (NL); Meijer, Eduard Lodewijk, 2514 HL Den Haag (NL); Van Leeuwen, Alexander Adrianus, 2624 BC Delft (NL); Klee, Tjark Onno, 3232 AP Brielle (NL); Fransen, Renatus Ignatius Joséphus, 3135 ZD Vlaardingen (NL)
(74) Representative: Corten, Maurice Jean F.M.

(57) **Abstract**

A device (1) for milking a dairy animal, comprising a teat cup (4) with a teat liner (30) and a disinfection device (10) for disinfecting at any rate at least a part of the teat liner by means of a disinfecting fluid. The disinfection device comprises a heating device (11) for heating the disinfecting fluid, and the disinfection device is suitable for bringing the disinfecting fluid into contact with at any rate at least a part of the teat liner. A control unit (5) is suitable for controlling the disinfection device. The heating device is suitable for heating the disinfecting fluid to such a temperature that the disinfecting fluid has a temperature of at least approximately 95 °C when it is in contact with the teat liner. The control unit (5) is suitable for registering values of at least one control parameter of the disinfection device.

## Description

The invention relates to a device for and a method of milking a dairy animal according to the characterizing part of claim 1.

Such a device for and method of milking a dairy animal are known from patent WO 03/077645.

This patent describes, in the context of disinfection, the application of steam that is sufficiently hot for heating at least a part of a teat liner to a temperature at which micro-organisms and bacteria are killed or eliminated. The disinfection and/or sterilisation should preferably comprise the whole inner part of a teat liner. In this device it is possible that the disinfection does not achieve the intended result.

It is an object of the invention to obviate the aforementioned drawback at any rate at least partially. To this end, the device mentioned in the preamble comprises the features of the characterizing part of claim 1. The invention is based on the insight that with the device described in patent WO 03/077645 there is a too great uncertainty as regards the actual temperature of a disinfecting fluid that is in contact with the teat liners.

By prescribing a temperature of ≥ 95 °C of the disinfecting fluid that is in contact with at any rate at least a part of the teat liners, there is obtained a great certainty that the desired disinfection will actually be achieved with the desired parameters. By control with the aid of temperature measuring means and feed back regulation of a heating device for heating a disinfecting fluid, the temperature mentioned, or another desired temperature, will be achieved. Registration of values of at least one control parameter of the disinfection device will further increase this certainty. Control parameters are those parameters by which a disinfecting treatment is determined.

The causers of udder diseases and udder infections that are present on at any rate at least a part of a teat liner are at least eliminated if the relevant surfaces of a teat liner attain a sufficiently high temperature during the disinfection. Therefore, in an embodiment of a device according to the invention, the heating device is suitable for heating the disinfecting fluid to such a temperature that at any rate at least a part of the teat liner is capable of being heated by the disinfecting fluid to a temperature of at least approximately 95 °C.

The temperature range for attaining a complete disinfection of at any rate at least a part of the teat liners, in which the causers of udder diseases and udder infections are killed, lies approximately between 100°C and 180 °C. In view of inter alia the fact that a disinfection that eliminates causers of udder diseases and udder infections is in principle adequate, and in view of the thermal loadability of a teat liner and the intensive elastic deformations of a teat liner under operating conditions, a range between 100 °C and 150 °C may be chosen as a practical, active temperature range for disinfection of at any rate at least a part of the teat liners. Additionally, it is pointed out that, for example, steam is only one of a plurality of disinfecting fluids that can be taken into consideration.

In view of the not unlimited thermal loadability of a teat liner and an adequate disinfection result, an embodiment of a device according to the invention in which the heating device is suitable for heating the disinfecting fluid to such a temperature that at any rate at least a part of the teat liner is capable of being heated by the disinfecting fluid to a temperature between approximately 100 °C and approximately 150 °C is a good compromise.

Under the current, usual milking conditions the aforementioned device is capable of effecting the adequate, desired disinfection. However, it is well possible that the development in teat liner materials leads to materials that are fairly temperature-insensitive. Poor conduction of heat through the teat liner material is undesirable. In that case, exposure of teat liners to hot disinfecting fluids will not lead to the high teat liner temperatures that have to be obtained for a successful disinfection. This is the underlying idea of an embodiment of the inventive idea, in which the heating device is suitable for heating the disinfecting fluid to such a temperature that the disinfecting fluid has a temperature between approximately 100 °C and approximately 150 °C when the disinfecting fluid is in contact with at any rate at least a part of the teat liner.

Before starting the disinfection of at any rate at least a part of the teat liner by means of a disinfecting fluid, it is often desirable to remove milk and/or other residues that are present on at least the teat liner by means of a cleaning fluid. Therefore, in an embodiment of a device according to the invention, the disinfection device comprises a cleaning device for removing the aforementioned substances by means of a cleaning fluid. As a cleaning fluid may be applied, for example, water, a mix of water and air, or water with a chemical cleaning substance added thereto.

It may be desirable to remove the cleaning fluid, for example water with a chemical cleaning substance added thereto, that is present on at any rate at least a part of the teat liner, before the disinfection step takes place. In an embodiment of a device according to the invention, means are present for that purpose. The pressure of the disinfecting fluid and/or the cleaning fluid is capable of being regulated and determined.

It is pointed out that it is also possible to start the disinfection immediately by exposing at any rate at least a part of the teat liner to the disinfecting fluid, and to carry out subsequently the aforementioned steps of applying a cleaning fluid and removing the cleaning fluid.

After the disinfection some disinfecting fluid remains on at any rate at least a part of the teat liner. All causers of udder diseases and udder infections on at any rate at least a part of the teat liner have been eliminated. Active cooling and cleaning of a teat liner can now be achieved by passing fluids through the teat liner. Flushing with water forms a simple and energy-technically favourable method. The temperature of the water is capable of being regulated. A possibly still moist teat liner easily slides over a teat of a next dairy animal to be milked during the connection of a teat cup containing a teat liner.

In this context, additionally applying compressed air or sucking in air through the teat liner by means of the vacuum pump present in a milking system is, in principle, also possible. An advantage of the latter method relative to applying compressed air is the faster evaporation of condensate on a teat liner by the locally created low pressure in the proximity of a teat liner surface. The two last mentioned methods also comprise the removal of the disinfecting and/or cleaning fluid residues.

As soon as a sufficiently low teat liner temperature has been attained and determined, the connection of the teat cup to a next dairy animal to be milked can start.

In an embodiment of a device according to the invention, the control unit that controls the disinfection device is suitable for controlling the disinfection device with the aid of a first regulation parameter, the first regulation parameter being a control parameter of the disinfection device. By registering values of a control parameter and controlling the disinfection device with the aid of these control parameter values, feedback regulation of disinfection process parameters is possible. There is thus obtained a firmer grip on a correct performance of the disinfection procedure.

In an embodiment of a device according to the invention, the control unit is suitable for putting the disinfection device into operation and the control parameter is a time-dependent parameter, such as, for example, the duration of operation. The amount of released disinfecting fluid may also be chosen as a control parameter.

In an embodiment of a device according to the invention, the control unit is suitable for putting the disinfection device out of operation when a threshold value is exceeded. This threshold value may be an adjustable threshold value. In the case that the milking system and in particular the teat liners are cleaned with water, a mix of water and air, or water with a chemical cleaning substance added thereto, a threshold value in the range between approximately 2 and 5 minutes may be chosen.

In an embodiment of a device according to the invention, the disinfection device comprises a release device for releasing the disinfecting fluid, the control unit being suitable for putting the release device into operation and for putting the release device out of operation when a threshold value is exceeded. By registering values of a control parameter and by putting the release device of the disinfection device out of operation when it is established that a threshold value is exceeded, a proper protection against thermal overload of the teat liners is achieved. Putting the release device out of operation in time is absolutely necessary from a point of view of security. Also from an environmental point of view it is desirable that the release device is put out of operation in time.

In an embodiment of a device according to the invention, the threshold value at which the release device is put out of operation has a time-dependent value, in particular a span of time. When applying steam as a disinfecting fluid, the threshold value can be between approximately 3 seconds and approximately 15 seconds; when applying water and chemical substances, a threshold value of approximately 1 minute can be taken into consideration.

In an embodiment of a device according to the invention, the milking device comprises an animal identification system for determining the identity of an animal and for supplying an animal identification signal to the control unit, the control unit controlling the disinfection device at least partially with the aid of the animal identification signal. An animal related disinfection and/or cleaning treatment of at least one teat liner is thus possible.

In an embodiment of a device according to the invention, the disinfection device of the milking device comprises a cooling device for actively cooling at any rate at least a part of the teat liner. After having been exposed to a hot disinfecting fluid, a teat liner has to be cooled before it is possible to connect the teat liner again to a teat of a dairy animal. In an embodiment of a device according to the invention, the cooling device comprises a vacuum pump, but it is also possible to effect an adequate cooling with compressed air or water. In an embodiment of a device according to the invention, there are provided technical means for applying the aforementioned fluids. The cooling device is capable of being controlled by the control unit, partially by the possibility of inputting a regulation parameter value for the cooling device. This regulation parameter may be, for example, a span of time during which cooling has to take place, a desired final cooling temperature, etc. The cooling intensity is thus inputted.

In an embodiment of a device according to the invention, the control unit comprises an input device for inputting a second regulation parameter for controlling the disinfection device. Said second regulation parameter may relate, for example, to an adjustable threshold value or an animal-dependent value. The second regulation parameter can be a control parameter of the desinfection device.

Measuring the temperature of the disinfecting fluid that is in contact with at any rate at least a part of the teat liner is necessary for being able to control the disinfection process. By supplying the measurement data to the control unit, it is possible to store these data and to process them for the purpose of feedback regulation of the heating device for the disinfecting fluid. There is thus obtained a closed control loop, which increases the reliability of a successful disinfection to a great extent. In an embodiment of a device according to the invention, the disinfection device is provided for that purpose with a first temperature measuring member for measuring the temperature of the disinfecting fluid that is in contact with at any rate at least a part of the teat liner, for generating a first temperature signal that is indicative of the measured disinfecting fluid temperature and for supplying the first temperature signal to the control unit.

In an embodiment of a device according to the invention, the disinfection device is provided with a second temperature measuring member for measuring the temperature of at any rate at least a part of the teat liner, for generating a second temperature signal that is indicative of the measured teat liner temperature, and for supplying the second temperature signal to the control unit.

In an embodiment of a device according to the invention, in which the teat liner is made of elastic material, the second temperature measuring member is suitable for measuring a displacing behaviour of at any rate at least a part of the teat liner. The mentioned temperature measuring means may be embedded inter alia in a teat liner, and/or be disposed on a teat liner, and/or be disposed on a teat cup, and/or be embedded in a teat cup.

In an embodiment of a device according to the invention, in which the teat liner comprises a teat receiving aperture and a milk discharge aperture, the temperature measuring member is located above the teat receiving aperture of a teat liner or is capable of being displaced to said position. A proper measurement of the temperature of the disinfecting fluid that is in contact with at any rate at least a part of the teat liner or the temperature of the teat liner that is in contact with the disinfecting fluid is obtained if the temperature measuring member is located above the teat liner. A possible constructive embodiment of this idea may result in a temperature measuring member that is positioned above the teat liner, in particular the teat receiving aperture, only at the moment of measuring.

In an embodiment of a device according to the invention, in which the teat liner comprises a teat receiving space for receiving a teat of a dairy animal and the teat receiving space is the space in a teat liner between the teat receiving aperture and the milk discharge aperture of a teat liner, the temperature measuring member is capable of being inserted into the teat receiving space of a teat liner. The temperature measuring member, for example an infrared sensor or an air flow sensor, is located for example in or on a disinfecting member that is inserted into a teat liner during the disinfection. Measuring in the immediate vicinity of the teat liner surface increases the reliability of the measurement results. It is pointed out that the infrared sensor and/or air flow sensor can also occupy fixed positions in the disinfection device.

A temperature feedback control circuit increases the reliability of the achievement of the desired values of the disinfection process parameters. The now following embodiments result from this basic idea. In an embodiment of a device according to the invention, the regulation parameter is a desired disinfecting fluid temperature of the disinfecting fluid that is in contact with at any rate at least a part of the teat liner, and the control unit controls, with the aid of the desired disinfecting fluid temperature, the heating device for heating the disinfecting fluid in such a way that the disinfecting fluid that is in contact with at any rate at least a part of the teat liner is capable of being heated to the desired disinfecting fluid temperature.

In an embodiment of a device according to the invention, the regulation parameter is a desired teat liner temperature of at any rate at least a part of a teat liner that is in contact with the disinfecting fluid, and the control unit controls, with the aid of the teat liner temperature, the heating device for heating the disinfecting fluid in such a way that at any rate at least the part of the teat liner that is in contact with the disinfecting fluid is capable of being heated to the desired teat liner temperature.

In an embodiment of a device according to the invention, the control unit is provided with a comparing device for comparing the measured temperature with the desired temperature, for generating a comparison signal that is indicative of the comparison result and for supplying the comparison signal to the control unit, the control unit controlling, with the aid of said comparison signal, the heating device in such a way that the desired temperature is attainable.

In an embodiment of a device according to the invention, in which the milking device is also provided with a detection device for detecting physical and/or chemical abnormalities in milk secreted by a dairy animal, the control unit controls the disinfection device with the aid of data from the detection device. Based on a measured/determined milk quality, the control unit is capable of adjusting the disinfection process in an intelligent manner. If, for example, milk with a high somatic cell count is detected, a longer disinfection time or a larger amount of disinfecting fluid is desirable.

To this end, it has already been set out in detail that steam is very suitable as a disinfecting fluid. Therefore, in an embodiment of a device according to the invention, the disinfection device is suitable for generating steam as a disinfecting fluid.

In an embodiment of a device according to the invention, the milking device comprises a robot arm for automatically connecting a teat cup to a teat of a dairy animal.

In an embodiment of a device according to the invention, the robot arm is capable of being controlled by the control unit for automatically connecting a teat cup to a teat of a dairy animal when a parameter value comes below an adjustable threshold value for the second temperature signal and the disinfection device is out of operation. As a threshold value for the second temperature signal approximately 40 °C may be chosen. As soon as at any rate at least a part of a teat liner has attained such a temperature and this has actually been detected, the teat liner is suitable for being connected to the teat of a dairy animal. There is thus created a protection against the connection of teat liners having a too high temperature.

In an embodiment of a device according to the invention, the disinfection device is provided with an additive member for adding an additive. Before the disinfecting fluid exercises its disinfecting action on at any rate at least a part of the teat liner of a milking device, an indication substance can be applied in a teat liner. After disinfecting, it is possible by measuring, for example, discoloration of the indication substance, with the aid of technical means, whether the intended disinfection has been successful and/or to what extent all the surfaces to be disinfected have actually been disinfected. It is also possible to add, by means of the additive member, an additional disinfecting substance to the disinfecting fluid just before the moment the disinfecting fluid comes into contact with a teat liner surface. This may be desirable because of chemical reactivity of the disinfecting fluid with the additive. In this context, by indication substance and additive are also meant indication fluids and additional fluids. In an embodiment of a device according to the invention, the additive member is capable of being controlled by the control unit.

In an embodiment of a device according to the invention, in which the teat liner comprises a teat receiving aperture and a milk discharge aperture and the milk discharge aperture is connected to a foremilk discharge device, the disinfection device is suitable for displacing the disinfecting fluid in a direction from the teat receiving aperture to the milk discharge aperture, in a way in which the disinfecting fluid gets into the milk discharge device. It is thus achieved that the disinfection also comprises the connecting milk line between a teat liner and the foremilk discharge device, and the foremilk discharge device per se. A temperature measuring member at the place where the foremilk discharge device is located measures the temperature of the disinfecting fluid at that place. By feedback of the measured disinfecting fluid temperature to the control unit the heating device of the disinfection device can be controlled in such a way that a desired disinfecting fluid temperature of the disinfecting fluid in the foremilk discharge device is actually achieved. For this purpose, temperature measuring means may also be included in the aforementioned connecting milk line.

In an embodiment of a device according to the invention, the disinfection device of the milking device comprises a pulsation device for pulsating at any rate at least a part of the teat liner and a control unit for registering values of at least one control parameter of the disinfection device. Said pulsation device makes it possible to vibrate the teat liner at a high pulsation frequency when a disinfecting fluid or cleaning fluid is being brought into contact with at any rate at least a part of a teat liner. The removal of milk, disinfecting fluid and/or other residues on a teat liner surface is promoted in this manner.
The invention further relates to methods of milking a dairy animal.

A method of milking a dairy animal by means of a milking device that comprises a teat cup with a teat liner and a disinfection device for disinfecting at any rate at least a part of the teat liner by means of a disinfecting fluid, the disinfection device comprising a heating device for heating the disinfecting fluid and the disinfection device being suitable for bringing the disinfecting fluid into contact with the teat liner, a control unit being suitable for controlling the disinfection device, which method comprises the following steps for disinfecting at any rate at least a part of a teat liner: the step of heating the disinfecting fluid and the step of bringing the disinfecting fluid into contact with at any rate at least a part of the teat liner. The step of heating the disinfecting fluid comprises the step of heating it to such a temperature that the disinfecting fluid has a temperature of at least approximately 95 °C when it is in contact with at any rate at least a part of the teat liner.

In an embodiment of a method according to the invention, the method comprises the step of registering values of at least one control parameter of the disinfection device.

A method of milking a dairy animal by means of a milking device that comprises a teat cup with a teat liner and a disinfection device for disinfecting at any rate at least a part of the teat liner by means of a disinfecting fluid, the disinfection device comprising a heating device for heating the disinfecting fluid and the disinfection device being suitable for bringing the disinfecting fluid into contact with the teat liner, a control unit being suitable for controlling the disinfection device, which method comprises the following steps for disinfecting at any rate at least a part of a teat liner: the step of heating the disinfecting fluid and the step of bringing the disinfecting fluid into contact with at any rate at least a part of the teat liner. The method also comprises the step of registering values of at least one control parameter of the disinfection device.

Favourable embodiments of the above methods according to the invention are described hereafter.

In an embodiment of a method according to the invention, the method comprises the step of heating the disinfecting fluid to such a temperature that at any rate at least a part of the teat liner is capable of being heated by the disinfecting fluid to a temperature of at least approximately 95 °C.

In an embodiment of a method according to the invention, the method comprises the step of heating the disinfecting fluid to such a temperature that the disinfecting fluid has a temperature between approximately 100 °C and approximately 150 °C when the disinfecting fluid is in contact with at any rate at least a part of the teat liner.

In an embodiment of a method according to the invention, the method comprises the step of heating the disinfecting fluid to such a temperature that at any rate at least a part of the teat liner is capable of being heated by the disinfecting fluid to a temperature between approximately 100 °C and approximately 150 °C.

In an embodiment of a method according to the invention, the method comprises the step of removing, by means of a cleaning fluid, milk, disinfecting fluid and/or other residues that are present on at any rate at least a part of the teat liner.

In an embodiment of a method according to the invention, the method comprises the step of removing the cleaning fluid that is present on at any rate at least a part of the teat liner.

In an embodiment of a method according to the invention, the method comprises the step of controlling the disinfection device with the aid of a first regulation parameter, the first regulation parameter being the control parameter.

In an embodiment of a method according to the invention, the control parameter is time-dependent.

In an embodiment of a method according to the invention, the control parameter is the duration of operation and the method comprises the step of putting the disinfection device into operation by the control unit.

In an embodiment of a method according to the invention, the control parameter is the amount of disinfecting fluid and the method comprises the step of putting the disinfection device into operation by the control unit.

In an embodiment of a method according to the invention, the method comprises the step of putting the disinfection device out of operation by the control unit when a threshold value is exceeded.

In an embodiment of a method according to the invention, the mentioned threshold value is an adjustable threshold value.

In an embodiment of a method according to the invention, the threshold value amounts to between approximately 2 and approximately 5 minutes.

In an embodiment of a method according to the invention, the method comprises the step of releasing the disinfecting fluid by a release device, the step of putting the release device into operation, and the step of putting the release device out of operation when a threshold value is exceeded.

In an embodiment of a method according to the invention, the threshold value amounts to between approximately 3 and approximately 15 seconds.

In an embodiment of a method according to the invention, the method comprises the step of determining the identity of an animal, and the step of controlling the disinfection device partially with the aid of the determined animal identity.

In an embodiment of a method according to the invention, the method comprises the step of actively cooling at any rate at least a part of the teat liner.

In an embodiment of a method according to the invention, the method comprises the step of controlling the disinfection device with the aid of a second regulation parameter.

In an embodiment of a method according to the invention, the second regulation parameter is an adjustable threshold value.

In an embodiment of a method according to the invention, the second regulation parameter has an animal-dependent value.

In an embodiment of a method according to the invention, the method comprises the step of measuring the temperature of the disinfecting fluid that is in contact with at any rate at least a part of the teat liner, the step of generating a first temperature signal that is indicative of the measured disinfecting fluid temperature, and the step of supplying the first temperature signal to the control unit.

In an embodiment of a method according to the invention, the method comprises the step of measuring the temperature of at any rate at least a part of the teat liner, the step of generating a second temperature signal that is indicative of the measured teat liner temperature, and the step of supplying the second temperature signal to the control unit.

In an embodiment of a method according to the invention, in which the teat liner is made of elastic material, the method comprises the step of measuring a displacing behaviour of at any rate at least a part of the teat liner.

In an embodiment of a method according to the invention, the teat liner comprising a teat receiving aperture and a milk discharge aperture, the method comprises the step of displacing the temperature measuring member to a position above the teat receiving aperture of a teat liner.

In an embodiment of a method according to the invention, the teat liner comprising a teat receiving space for receiving a teat of a dairy animal, the teat receiving space being the space in a teat liner between the teat receiving aperture and the milk discharge aperture of a teat liner, the method comprises the step of inserting the temperature measuring member into the teat receiving space of a teat liner.

In an embodiment of a method according to the invention, the temperature measuring member is an infrared sensor or an air flow sensor.

In an embodiment of a method according to the invention, the method comprises the step of controlling, with the aid of a desired disinfecting fluid temperature of the disinfecting fluid that is in contact with the teat liner, the heating device for heating the disinfecting fluid in such a way that the disinfecting fluid that is in contact with the teat liner is capable of being heated to the desired disinfecting fluid temperature.

In an embodiment of a method according to the invention, the method comprises the step of controlling, with the aid of a desired teat liner temperature of at any rate at least a part of a teat liner that is in contact with the disinfecting fluid, the heating device for heating the disinfecting fluid in such a way that at any rate at least a part of the teat liner that is in contact with the disinfecting fluid is capable of being heated to the desired teat liner temperature.

In an embodiment of a method according to the invention, the method comprises the step of comparing the measured temperature with the desired temperature, the step of generating a comparison signal that is indicative of the comparison result, the step of supplying the comparison signal to the control unit, and the step of controlling the heating device by the control unit with the aid of this comparison signal in such a way that the desired temperature is attainable.

In an embodiment of a method according to the invention, comprising a milking device that is provided with a detection device for detecting physical and/or chemical abnormalities in milk secreted by a dairy animal, the method comprises the step of controlling the disinfection device with the aid of data from the detection device.

In an embodiment of a method according to the invention, the method comprises the step of generating steam as a disinfecting fluid.

In an embodiment of a method according to the invention, the method comprises the step of automatically connecting a teat cup to a teat of a dairy animal by means of a robot arm.

In an embodiment of a method according to the invention, the method comprises the step of controlling the robot arm for automatically connecting a teat cup to a teat of a dairy animal when a parameter value comes below an adjustable threshold value for the second temperature signal and the disinfection device is out of operation.

In an embodiment of a method according to the invention, the threshold value for the second temperature signal is approximately 40 °C.

In an embodiment of a method according to the invention, the method comprises the following successive steps:
- disinfecting at any rate at least a part of the teat liner, steam being chosen as a disinfecting fluid;
- removing milk and/or other residues that are present on at any rate at least a part of the teat liner by means of a cleaning fluid.

In an embodiment of a method according to the invention, the latter method comprises subsequently the step of removing the cleaning fluid that is present on at any rate at least a part of the teat liner.

Another method of milking a dairy animal by means of a teat cup with a teat liner, is a method in which, successively, the teat cup is connected to a teat of the dairy animal, milk is drawn from the teat by means of a pulsating movement of at any rate at least a part of the teat liner in said teat cup and the teat cup is disconnected after the drawing of milk has been finished, said method comprising, subsequent to the disconnection of the teat cup, the following successive steps:
- disinfecting at any rate at least a part of the teat liner by means of steam;
- removing milk and/or other residues that are present on at any rate at least a part of the teat liner by means of a cleaning fluid.

In an embodiment of a method according to the invention, the latter method comprises subsequently the step of removing the cleaning fluid that is present on at any rate at least a part of the teat liner.

In an embodiment of a method according to the invention, the above mentioned methods, in which the teat liner comprises a teat receiving aperture and a milk discharge aperture and the milk discharge aperture is in connection with a foremilk discharge device, comprise the step of displacing the steam in a direction from the teat receiving aperture to the milk discharge aperture in such a way that the steam gets into the foremilk discharge device.

In an embodiment of a method according to the invention, the above mentioned methods comprise the step of moving in a pulsating manner at any rate at least a part of the teat liner when steam is being brought into contact with at any rate at least a part of the teat liner.

Another method of milking a dairy animal is a method which comprises the step of disinfecting at any rate at least a teat liner by directly heating at any rate at least a part of the teat liner in such a way that at any rate at least a part of the teat liner attains a temperature of at least approximately 95 °C.

In the above mentioned methods, in which a disinfection device performs the disinfecting actions, the methods comprise the step of registering values of at least one control parameter of the disinfection device.

A further method of milking a dairy animal, is a method which comprises the step of disinfecting at any rate at least a part of a teat liner by heating at any rate at least a part of the teat liner, a disinfection device performing the disinfecting actions and the method comprising the step of registering values of at least one control parameter of the disinfection device.

Finally, within the context of the inventive idea, as regards the disinfection of at any rate at least a part of a teat liner in a milking device by prescribing a temperature of ≥ 95 °C, it is pointed out that an adequate disinfection can also be achieved by direct heating of at any rate at least a part of a teat liner without the aid of a heat transfer fluid. Control with the aid of temperature measuring means and feedback regulation of a heating device for heating at any rate at least a part of the teat liner are again essential to a safe, successful disinfection.

The invention will be explained hereinafter in further detail with reference to some embodiments shown in the drawing, in which:
Figure 1 shows schematically a side view of a milking device for automatically milking animals, with a possible embodiment according to the invention of a disinfection device for disinfecting at any rate at least a part of the teat liner by means of a disinfecting fluid being present therein;
Figure 2 shows schematically the disinfection device of the milking device shown in Figure 1;
Figure 3 shows schematically a possible embodiment of a disinfecting member;
Figure 4 shows schematically one of a plurality of possible embodiments of a disinfection device for disinfecting at any rate at least a part of the teat liner by direct heating.

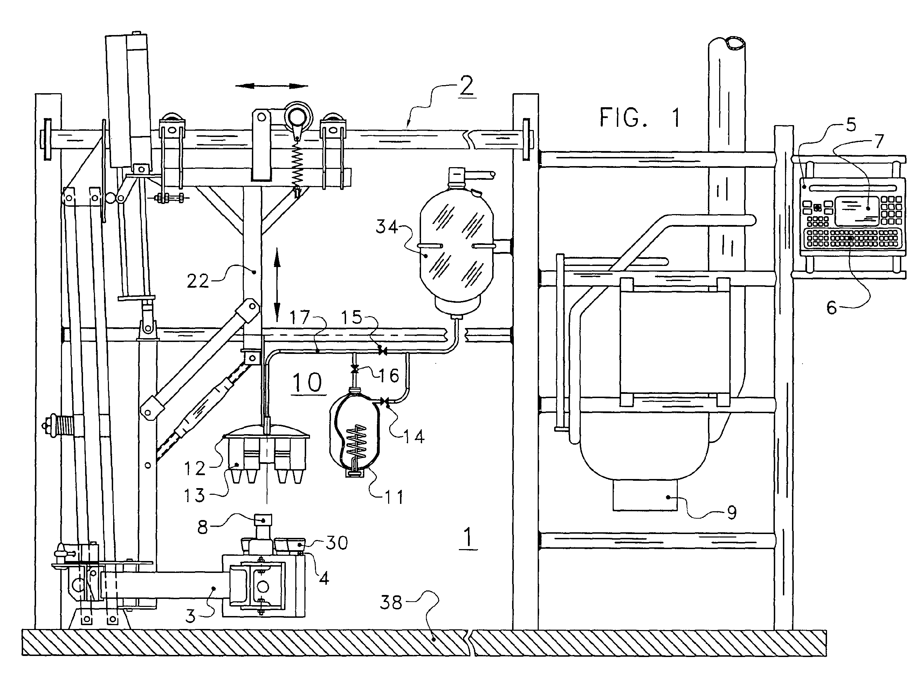

Figure 1 shows schematically a device 1 for automatically milking dairy animals. The device 1 comprises a milking parlour 38 which is surrounded by a fencing 2 that allows a dairy animal, in this embodiment a cow, a limited freedom of movement. The device 1 comprises a robot arm 3 carrying the teat cups 4 to be connected to the teats of the cow. The device 1 is controlled by a control unit 5 that is provided with an input device 6, such as a keyboard, for inputting data and with a screen 7. On the robot arm 3 there is also disposed a teat position measuring device 8 for measuring the position of the teats of a cow. The data obtained by the teat position measuring device 8 are used by the control unit 5 for moving the robot arm 3 in such a way that the teat cups 4 can be connected to the teats. It will be obvious that all kinds of position measuring means 8 known per se, for example lasers, cameras, ultrasonic sensors and the like, may be applied within the scope of the invention. In the embodiment shown, the robot arm 3 carries both the teat cups 4 and the position measuring device 8, but it will be obvious that there may also be applied a robot arm 3 with a gripper for gripping teat cups 4 from a storage space. In an alternative embodiment, the position measuring device 8 may also be arranged on a separate robot arm 3 or even in a fixed position inside or outside the milking parlour 38. There is disposed an animal identification system 9 near the milking parlour 38 for recognizing the identity of a cow present in the milking parlour 38. In the device 1 for automatically milking dairy animals there is included a disinfection device 10.

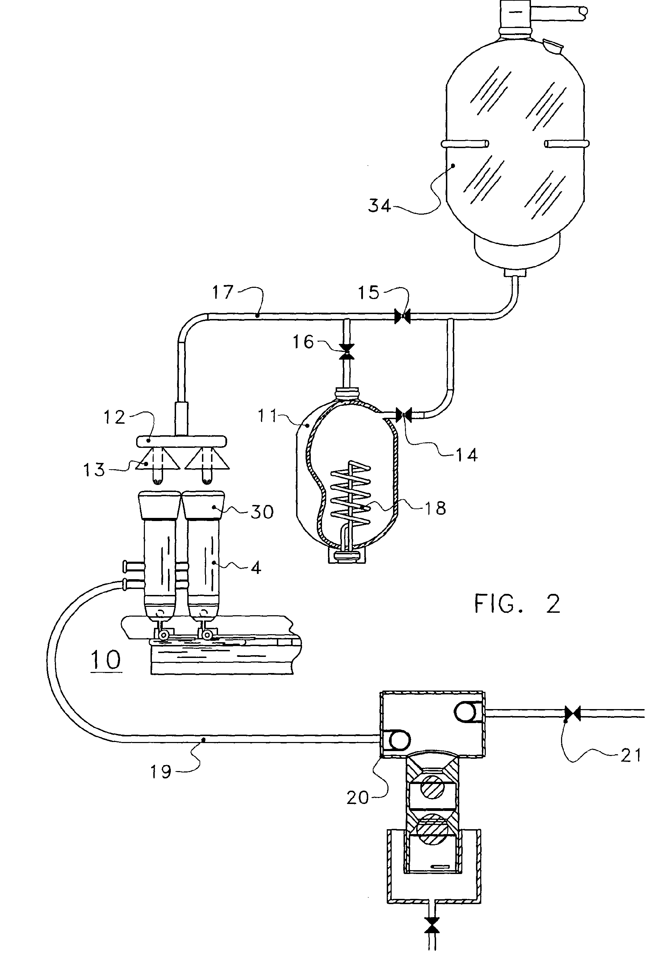

Figure 2 shows schematically the disinfection device 10 of the milking device 1 shown in Figure 1. In the chosen embodiment of the invention, the disinfecting fluid steam is chosen. It is obvious that many other possible fluids and constructive embodiments attuned thereto may be chosen within the scope of the inventive idea. The disinfection device 10 comprises a heating device 11 for heating a disinfecting fluid to a desired temperature. For disinfecting and cleaning by means of a fluid at any rate at least a part of the teat liners 30 (mounted in the teat cups 4) and the milk transport system (including milk storage vessels) connected thereto, the teat cups 4 are connected to a fluid applying device 12. Said fluid applying device 12 is rigidly fastened to a vertically orientated beam 22 of the milking device 1 and comprises four downwardly orientated disinfecting members 13. After the teat cups 4 have been connected to the disinfecting members 13, the disinfecting members 13 are located in the teat receiving spaces 39 of the individual teat liners 30. The teat receiving space 39 is the space between the teat receiving aperture 36 and the milk discharge aperture 37 of a teat liner 30.

The fluid applying device 12 is connected to a fluid vessel 34 and a heating device 11 via a fluid supply line 17. Said fluid vessel 34 is filled with water. It is also possible to provide each individual disinfecting member 13 with its own supply line and fluid vessel. When valve 15 is in its shut off position, valve 14 is controlled to be opened. Due to this, water is admitted to the heating device 11. Valve 14 and release device 16 are shut off at the moment when a (non-shown) fluid level measuring member detects a particular water level in the heating device 11. Now, a heating element 18 that is located in the heating device 11 heats the water to steam. A valve 21 is included in the fluid discharge line 19. By shutting off valve 21 a short fluid discharge line is obtained. Cleaning and disinfecting can now be started.

When valve 14 and release device 16 are shut off and valve 15 is controlled to be opened, hot water can be conveyed from the fluid vessel 34, through the fluid supply line 17, the fluid applying device 12, the disinfecting members 13, the teat liners 30, a fluid discharge line 19 and the foremilk discharge device 20. Now, the disinfection device 10 functions as a whole as it were as a cleaning device. The hot water removes fatty substances remained in components of the milk yielding system and/or prevents the proteins in milk residues from coagulating. After the cleaning has been finished, the valve 15 is shut off. Subsequently blowing compressed air into the teat liners 30 (the technical means required for this purpose are not depicted in Figure 2) is a tried and tested means to dry at any rate at least the teat liner surfaces. Cleaning and subsequently drying is state of the art.

Now disinfecting is started. First of all the release device 16 is controlled to be opened, (valves 15 and 14 in shut off position) so that steam is now conveyed from the heating device 11, via the fluid supply line 17, the fluid applying device 12 and the disinfecting members 13, through the teat liners 30, a fluid discharge line 19 and the foremilk discharge device 20. After a span of time of approximately 3 to 15 seconds, the release device 16 shuts off the release of steam. The valves 14, 15, 21 included in the disinfection device 10 and the release device 16 are automatically controlled by a control unit 5.

For this purpose, this control unit 5 is capable of registering at least values of one control parameter of the disinfection device 10. In this embodiment, only the disinfection of a part of the total milking system has been elaborated. It is obvious that steam disinfection is suitable for all the parts of the milking system that have been in contact with the milk yielded and/or with the animal or any other part of the system. Many constructive embodiments are possible for this purpose.

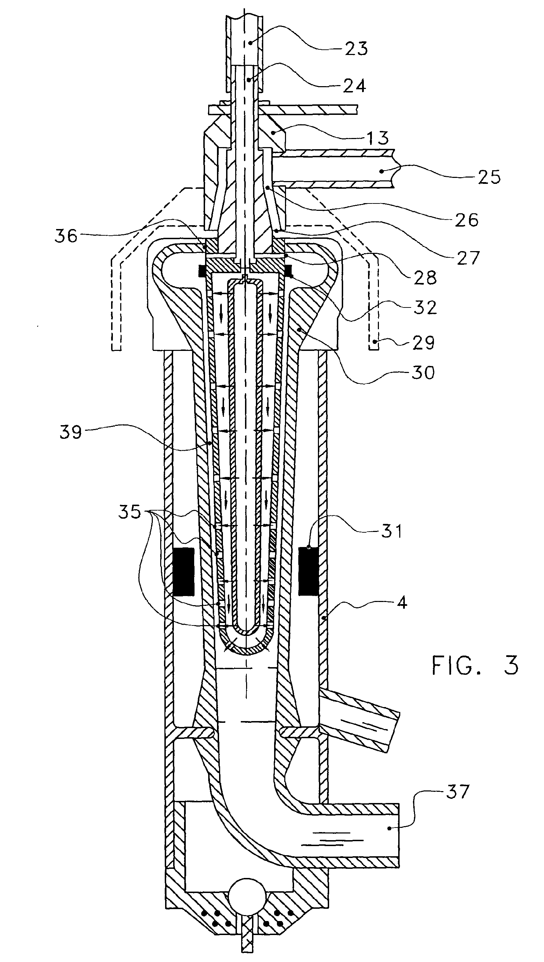

Figure 3 shows schematically a possible embodiment of a disinfecting member 13. Each of the disinfecting members 13 comprises two separated main fluid ducts 24 and 26. Duct 24 extends centrally through a disinfecting member 13 from top to bottom. In said duct 24 there are provided sidewardly orientated first outflow apertures 28 which, when a teat cup 4 is connected to a relevant disinfecting member 13, debouch relatively close below the upper edge of the teat liner 30 that is located in the teat cup 4. In the lower part of the disinfecting member 13 the disinfecting fluid steam leaves the disinfecting member 13 through the apertures 35, in the directions indicated by arrows. Duct 26 is disposed approximately concentrically relative to duct 24 in the disinfecting member 13 and shows at its lower side an annular outflow aperture 27 that is located in a plane perpendicular to the longitudinal axis of the disinfecting member 13 and the teat cup 4 connected thereto. Duct 24 of each of the disinfecting members 13 is connected to a supply line 23. Duct 26 of each of the disinfecting members 13 is connected to a tube element 25, the tube elements 25 of the separate disinfecting members debouching into a distribution element that is connected to a supply line (not shown in Figure 3). By supplying a fluid via the ducts 24 and 26 (or supplying non-identical fluids to the two ducts), the fluid is led, on the one hand, across the upper side of the teat liners 30 of the teat cups 4, whereas, on the other hand, the fluid is brought into the teat liners 30 of the teat cups 4. When the teat cups 4 are connected to the disinfecting members 13, a vacuum is generated in the teat cups 4. This results in that the teat cups 4 are moved upwards to some extent across the lower end of the relevant disinfecting members 13, and in that the outflow aperture 27 in each of the disinfecting members 13 is shut off. Therefore, the distance between the outflow aperture 28 and the outflow aperture 27 is relatively small. Said distance lies for example in the range of 5 mm - 10 mm. When the disinfecting fluid is supplied via the tube element 25 through the duct 26 under increased pressure, the disinfecting fluid leaving the outflow aperture 27 will be pressed between the lower edge of the aperture 27 and the somewhat yielding upper edge of the teat liner 30 into the relevant teat cup 4 and be sprayed in sideward direction. Therefore, the separate disinfecting members 13 are provided with a protecting element 29 covering the upper end of the connected teat cup(s). It is obvious that many embodiments of the disinfecting member 13 are possible. For example, the lower part, provided with a plurality of outflow apertures 35, of the disinfecting member shown in the figure, can be omitted. In that case, steam comes into contact, via the outflow apertures 27 and 28, with at any rate at least a part of the teat liner.

The disinfection device 10 comprises a first temperature measuring member (for example an infrared sensor) 32 (Figure 3) for measuring the temperature of the steam when it is in contact with at any rate at least a part of the teat liner 30. The measured value is sent to the control unit 5. Said control unit 5 comprises an input device 6 for inputting a desired temperature of the steam that is in contact with a teat liner 30. Based on a comparison between the desired temperature value of the steam and the measured temperature value - for that purpose the control unit 5 comprises a comparing device (not shown in Figure 1) - the control unit 5 controls the heating device 11 in such a way that the steam that is in contact with at any rate at least a part of the teat liner 30 will attain the desired temperature. The disinfection per se of the separate teat liners 30 may be influenced inter alia by time-dependent and animal-dependent regulation parameters. This must be understood in the broadest sense of the word. Upon detection of physical and/or chemical abnormalities in milk obtained from a dairy animal by means of a (non-depicted) detection device, the control unit 5 is capable of adapting the disinfection process parameters in an intelligent manner. The disinfection device 10 may further be provided with an additive member for adding an additive to the steam. Of course, adding an additive to the water in the fluid vessel 34 is possible as well.

After at any rate at least a part of a teat liner 30 has been disinfected, the temperature of the heated teat liner 30 has to be actively cooled to a teat liner temperature that is pleasant for an animal to be milked. A second temperature measuring member (for example an infrared sensor) 31 (Figure 3) measures the temperature of at any rate at least a part of the teat liner 30. The measured values are sent to the control unit 5. Said control unit 5 comprises an input device 6 for inputting a desired temperature of at any rate at least a part of the teat liner 30. With the aid of the desired temperature value of at any rate at least a part of the teat liner 30 and the measured temperature value, the control unit 5 controls a cooling device that constitutes part of the disinfection device 10 in such a way that at any rate at least a part of the teat liner 30 will attain the desired temperature. In this context, for example, a vacuum pump or a rinsing installation in which the rinsing fluid is water or air can be taken into consideration. An advantage of applying a vacuum pump as a cooling device lies in the fact that condensate in a teat liner evaporates more quickly as a result of the underpressure effected by the pump. Post-rinsing with cold water has a cleaning and cooling function and forms as such also a cooling device. If desired, a combination of the aforementioned cooling devices and the cooling methods related thereto may be applied. The active cooling per se of the separate teat liners 30 may be influenced on the basis of inter alia time-dependent and animal-dependent regulation parameters.

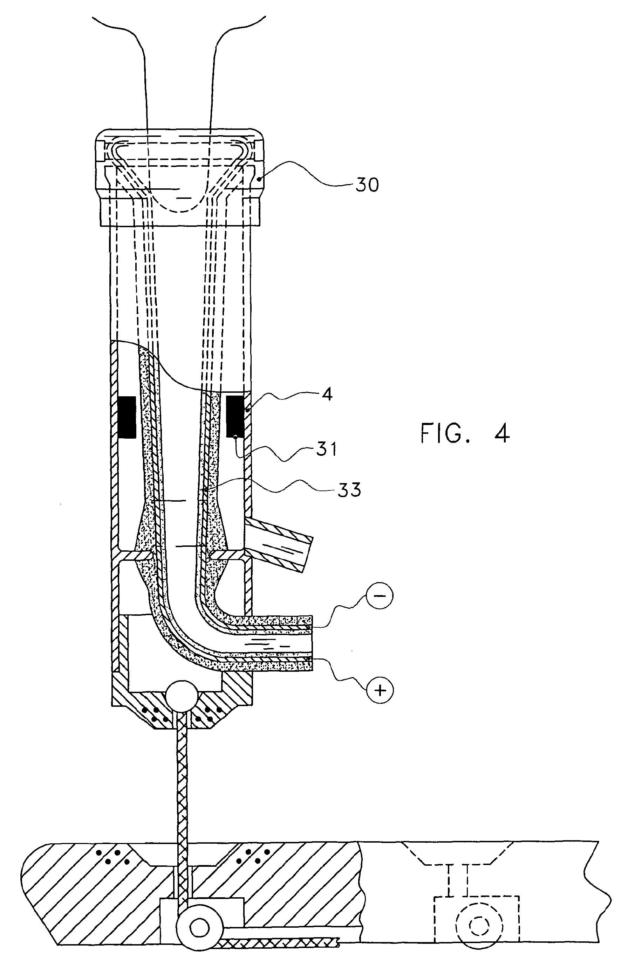

A possible embodiment of a disinfection device for disinfecting at any rate at least a part of the teat liner 30 by direct heating is shown in Figure 4. A heating member 33 is included in the teat liner 30. Said heating member 33 consists of a thin layer of electrically conductive material, which is capable of being heated by supply of electric energy. In principle, many unconventional principles are possible for the heating member 33 of the disinfection device. In this context may be taken into consideration, for example, particles in a teat liner 30 that are capable of being heated by electromagnetic radiation, the electromagnetic radiation belonging to the group: microwaves, infrared radiation, visible light and ultraviolet light. It is essential that the heating member 33 is in direct contact with or is capable of being brought into direct contact with the teat liner 30. In the latter case, for example, an element which is capable of being heated and which is capable of being brought into a close-fitting shape contact with at any rate at least a part of the teat liner should be taken into consideration. A temperature measuring member (for example an infrared sensor) 31 measures the temperature of at any rate at least a part of the teat liner 30, and sends the measured temperature value to a control unit 5. The control unit 5 comprises an input device 6 for inputting inter alia a desired teat liner temperature. Based on a comparison between the measured teat liner temperature and the desired teat liner temperature, the heating member 33 is controlled in such a way that the desired teat liner temperature is achieved. The heating process is controlled by the control unit 5 which is suitable for registering values of a control parameter. The control parameter values enable the control unit 5 to effect a reliable, successful disinfection.

## Claims

1. A device for milking a dairy animal, comprising a teat cup with a teat liner and a disinfection device for disinfecting at any rate at least a part of the teat liner by means of a disinfecting fluid, the disinfection device comprising a heating device for heating the disinfecting fluid, and the disinfection device being suitable for bringing the disinfecting fluid into contact with the teat liner, a control unit being suitable for controlling the disinfection device, **characterized in that** the heating device is suitable for heating the disinfecting fluid to such a temperature that the disinfecting fluid has a temperature of at least approximately 95 °C when it is in contact with at any rate at least a part of the teat liner.

2. A device as claimed in claim 1, **characterized in that** the control unit is suitable for registering values of at least one control parameter of the disinfection device.

3. A device for milking a dairy animal, comprising a teat cup with a teat liner and a disinfection device for disinfecting at any rate at least a part of the teat liner by means of a disinfecting fluid, the disinfection device comprising a heating device for heating the disinfecting fluid, and the disinfection device being suitable for bringing the disinfecting fluid into contact with the teat liner, a control unit being suitable for controlling the disinfection device, **characterized in that** the control unit is suitable for registering values of at least one control parameter of the disinfection device.

4. A device as claimed in any one of claims 1, 2 or 3, **characterized in that** the heating device is suitable for heating the disinfecting fluid to such a temperature that at any rate at least a part of the teat liner is capable of being heated by the disinfecting fluid to a temperature of at least approximately 95 °C.

5. A device as claimed in any one of the preceding claims, **characterized in that** the heating device is suitable for heating the disinfecting fluid to such a temperature that the disinfecting fluid has a temperature between approximately 100 °C and approximately 150 °C when the disinfecting fluid is in contact with at any rate at least a part of the teat liner.

6. A device as claimed in any one of the preceding claims, **characterized in that** the heating device is suitable for heating the disinfecting fluid to such a temperature that at any rate at least a part of the teat liner is capable of being heated by the disinfecting fluid to a temperature between approximately 100 °C and approximately 150 °C.

7. A device as claimed in any one of the preceding claims, with reference to any one of claims 2 or 3, **characterized in that** the control unit is suitable for putting the disinfection device into operation and **in that** the control parameter is the duration of operation.

8. A device as claimed in any one of the preceding claims, with reference to any one of claims 2 or 3, **characterized in that** the control unit is suitable for putting the disinfection device into operation and **in that** the control parameter is the amount of disinfecting fluid.

9. A device as claimed in any one of the preceding claims, **characterized in that** the disinfection device comprises a cooling device for actively cooling at any rate at least a part of the teat liner.

10. A device as claimed in any one of the preceding claims, **characterized in that** the control unit comprises an input device for inputting a second regulation parameter for controlling the disinfection device.

11. A device as claimed in claim 10, **characterized in that** the second regulation parameter is an adjustable threshold value.

12. A device as claimed in any one of the preceding claims, **characterized in that** the disinfection device is provided with a first temperature measuring member for measuring the temperature of the disinfecting fluid that is in contact with at any rate at least a part of the teat liner, for generating a first temperature signal that is indicative of the measured disinfecting fluid temperature and for supplying the first temperature signal to the control unit.

13. A device as claimed in any one of the preceding claims, **characterized in that** the disinfection device is provided with a second temperature measuring member for measuring the temperature of at least a part of the teat liner, for generating a second temperature signal that is indicative of the measured teat liner temperature and for supplying the second temperature signal to the control unit.

14. A device as claimed in any one of claims 12 to 13 with reference to claim 10, **characterized in that** the second regulation parameter is a desired disinfecting fluid temperature of the disinfecting fluid that is in contact with at any rate at least a part of the teat liner, and **in that** the control unit, with the aid of the desired disinfecting fluid temperature, controls the heating device for heating the disinfecting fluid in such a way that the disinfecting fluid that is in contact with at any rate at least a part of the teat liner is capable of being heated to the desired disinfecting fluid temperature.

15. A device as claimed in any one of claims 12 to 14 with reference to claim 10, **characterized in that** the second regulation parameter is a desired teat liner temperature of a teat liner that is in contact with the disinfecting fluid, and **in that** the control unit, with the aid of the teat liner temperature, controls the heating device for heating the disinfecting fluid in such a way that at any rate at least a part of the teat liner that is in contact with the disinfecting fluid is capable of being heated to the desired teat liner temperature.

16. A device as claimed in any one of the preceding claims, **characterized in that** the disinfection device is suitable for generating steam as a disinfecting fluid.

17. A device as claimed in any one of the preceding claims, **characterized in that** the milking device comprises a robot arm for automatically connecting a teat cup to a teat of a dairy animal.

18. A device as claimed in claim 17, with reference to claim 13, **characterized in that** the robot arm is capable of being controlled by the control unit for automatically connecting a teat cup to a teat of a dairy animal when a parameter value comes below an adjustable threshold value for the second temperature signal and the disinfection device is out of operation.

19. A device as claimed in claim 18, **characterized in that** the threshold value for the second temperature signal is indicative of a temperature of approximately 40 °C.

20. A method of milking a dairy animal by means of a milking device that comprises a teat cup with a teat liner and a disinfection device for disinfecting at any rate at least a part of the teat liner by means of a disinfecting fluid, the disinfection device comprising a heating device for heating the disinfecting fluid and the disinfection device being suitable for bringing the disinfecting fluid into contact with the teat liner, a control unit being suitable for controlling the disinfection device, which method comprises the following steps for disinfecting at any rate at least a part of a teat liner: the step of heating the disinfecting fluid and the step of bringing the disinfecting fluid into contact with at any rate at least a part of the teat liner, **characterized in that** the step of heating the disinfecting fluid comprises the step of heating it to such a temperature that the disinfecting fluid has a temperature of at least approximately 95 °C when it is in contact with at any rate at least a part of the teat liner.

21. A method of milking a dairy animal by means of a milking device that comprises a teat cup with a teat liner and a disinfection device for disinfecting at any rate at least a part of the teat liner by means of a disinfecting fluid, the disinfection device comprising a heating device for heating the disinfecting fluid and the disinfection device being suitable for bringing the disinfecting fluid into contact with the teat liner, a control unit being suitable for controlling the disinfection device, which method comprises the following steps for disinfecting at any rate at least a part of a teat liner: the step of heating the disinfecting fluid and the step of bringing the disinfecting fluid into contact with at any rate at least a part of the teat liner, **characterized in that** the method comprises the step of registering values of at least one control parameter of the disinfection device.

22. A method of milking a dairy animal by means of a teat cup with a teat liner, in which method, successively, the teat cup is connected to a teat of the dairy animal, milk is drawn from the teat by means of a pulsating movement of at any rate at least a part of the teat liner in said teat cup and the teat cup is disconnected after the drawing of milk has been finished, **characterized in that** the method comprises, subsequent to the disconnection of the teat cup, the following successive steps:
- disinfecting at any rate at least a part of the teat liner by means of steam;
- removing milk and/or other residues that are present on at any rate at least a part of the teat liner by means of a cleaning fluid.

23. A method of milking a dairy animal, which method comprises the step of disinfecting at any rate at least a teat liner by heating at any rate at least a part of the teat liner, **characterized in that** the teat liner is heated directly and **in that** at any rate at least a part of the teat liner attains a temperature of at least approximately 95 °C.

24. A method of milking a dairy animal, which method comprises the step of disinfecting at any rate at least a part of a teat liner by heating at any rate at least a part of the teat liner, a disinfection device performing the disinfecting actions, **characterized in that** the method comprises the step of registering values of at least one control parameter of the disinfection device.
